# FASCICULE DE BREVET EUROPEEN

(11) **EP 1 251 010 B1**
(45) Date de publication et mention de la délivrance du brevet: **14.06.2006**
(21) Numéro de dépôt: 02290971.7
(22) Date de dépôt: 17.04.2002
(51) Int. Cl.: B41J 23/02, H04N 1/00

(54) **Machine de bureau à imprimante et scanner et moteur multifonctionnel**
Büromachine mit Drucker und Abtaster und multifunktionellem Motor
Office machine with printer and scanner and multi-functional motor

(30) Priorité: 17.04.2001 FR 0105186
(43) Date de publication de la demande: 23.10.2002
(73) Titulaire: SAGEM Communication, 75015 Paris (FR)
(72) Inventeur: Marcq, Frédéric, 95160 Montmorency (FR); Boishardy, Pascal, 95640 Santeuil (FR)
(74) Mandataire: Bloch, Gérard

(56) Documents cités:
- EP-A- 0 575 153
- EP-A- 0 744 293
- FR-A- 2 694 857
- PATENT ABSTRACTS OF JAPAN vol. 1995, no. 09, 31 octobre 1995 (1995-10-31) & JP 07 154542 A (SHARP CORP), 16 juin 1995 (1995-06-16)
- PATENT ABSTRACTS OF JAPAN vol. 014, no. 428 (M-1025), 14 septembre 1990 (1990-09-14) & JP 02 169273 A (CANON INC), 29 juin 1990 (1990-06-29)

## Description

Le domaine de l'invention est celui des machines de bureau du type imprimante, copieur, terminal de communication. Plus particulièrement, l'invention concerne une machine comprenant une imprimante, pour imprimer des feuilles, un chargeur d'alimentation des feuilles à imprimer et un scanner d'analyse de feuilles imprimées, pour faire de la machine une machine à télécopier.

Plus particulièrement encore, l'invention concerne une machine avec une imprimante à jet d'encre.

Les machines de ce type peuvent comporter beaucoup de moteurs : un moteur de déplacement du chariot de la tête d'impression, on parle du moteur de chariotage, un moteur d'alimentation des feuilles dans l'imprimante et/ou d'avance des feuilles dans l'imprimante. Si, en outre, on veut charger des feuilles dans un scanner à défilement et les y entraîner en déplacement, on devrait a priori encore accroître la quantité de moteurs, ce qui rendrait les machines complexes.

On a déjà proposé deux moteurs respectivement pour l'imprimante et le scanner, chacun dédié au chargement, dans un sens de rotation, et à l'avance, dans l'autre sens de rotation, avec un système d'aiguillage pour sélectionner à un instant donné l'une ou l'autre des deux chaînes cinématiques réalisées à partir des deux moteurs.

On a aussi proposé de charger et de faire avancer les feuilles dans l'imprimante par un moteur tournant dans un sens, l'autre sens de rotation du moteur étant réservé au scanner.

D'autres solutions ont été proposées mais qui ne sont pas satisfaisantes.

La demanderesse a cherché une solution satisfaisante pour une machine avec une imprimante à jet d'encre et un scanner à défilement, et un unique moteur de chargement et d'avance de feuilles dans l'imprimante et d'avance de feuilles dans le scanner.

Dans une imprimante à jet d'encre, il est prévu une station motorisée, dite garage, qui est un organe qui peut occuper deux positions. Quand l'imprimante imprime, les buses de la tète d'impression assurent leur fonction et la tête n'est pas au garage, qui est en position de repos. Quand l'imprimante est au repos, les buses sont alors au garage pour les protéger et éviter qu'elles ne sèchent, elles sont coiffées par le garage qui a été déplacé de sa position de repos à sa position fonctionnelle de protection. Le cycle de fonctionnement du garage est donc l'inverse de celui de l'imprimante.

Et bien la demanderesse a eu l'idée d'utiliser la cinématique de déplacement du garage de la machine pour résoudre le problème de l'unicité du moteur d'imprimante et de scanner et c'est ainsi qu'elle propose son invention.

L'invention concerne donc une machine de bureau comprenant une imprimante et un scanner, une cinématique de chargement des feuilles dans l'imprimante, une cinématique d'avance des feuilles dans l'imprimante, une cinématique de défilement des feuilles dans le scanner et un organe mobile à cycle de fonctionnement inverse de celui de l'imprimante, machine caractérisée par le fait qu'elle comporte un unique moteur d'imprimante et de scanner, un engrenage baladeur attaqué par le moteur et agencé pour, selon le sens de rotation du moteur, être pivoté et attaquer la cinématique de défilement et la cinématique de chargement, et une cinématique solidaire de l'organe mobile pour faire engrener l'engrenage baladeur et la cinématique d'avance.

L'invention est remarquable par le fait qu'elle comporte un moteur unique multi-fonctionnel et qu'on utilise le déplacement d'un organe parallèle de la machine pour assurer l'un des engrenages nécessaires.

De préférence, l'organe est monté mobile en déplacement vertical et la cinématique qui en est solidaire est agencée pour transformer ce déplacement vertical en un déplacement sensiblement vertical de même sens.

Avantageusement, la cinématique de l'organe mobile porte une roue de sortie embarquée sur un levier pivotant est agencée pour engrener avec l'engrenage baladeur et attaquer la cinématique d'avance.

Dans la forme de réalisation préférée de la machine de l'invention, l'engrenage baladeur comporte une roue menante montée sur l'arbre du moteur et une roue menée portée par une coque montée tourillonnante sur la roue menante et agencée pour être entraînée en pivotement par frottement.

Toujours de façon préférée, les cinématiques de défilement et de chargement comportent, chacune, une roue montée sur le support du moteur.

L'invention sera mieux comprise à l'aide de la description suivante de la forme de réalisation préférée de la machine, en référence au dessin en annexe, sur lequel
- la figure 1 représente une vue en perspective de l'imprimante de la machine ;
- la figure 2 représente une vue en perspective des quatre cinématiques de la machine ;
- la figure 3 représente schématiquement la cinématique de chargement de feuilles dans l'imprimante ;
- la figure 4 représente schématiquement la cinématique d'avance de feuilles dans l'imprimante et
- la figure 5 représente schématiquement la cinématique de défilement de feuilles dans le scanner.

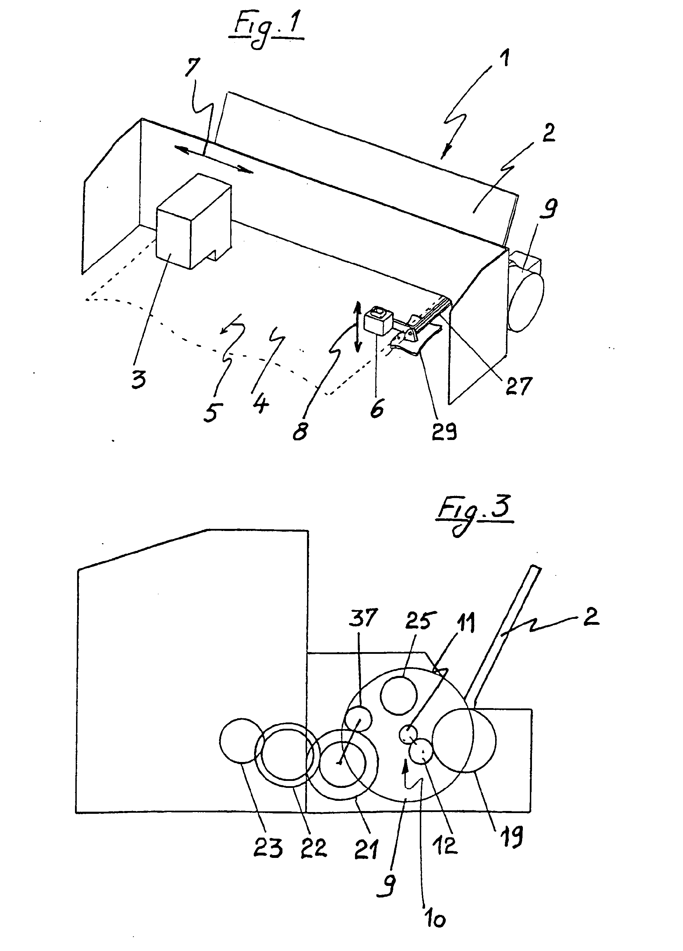

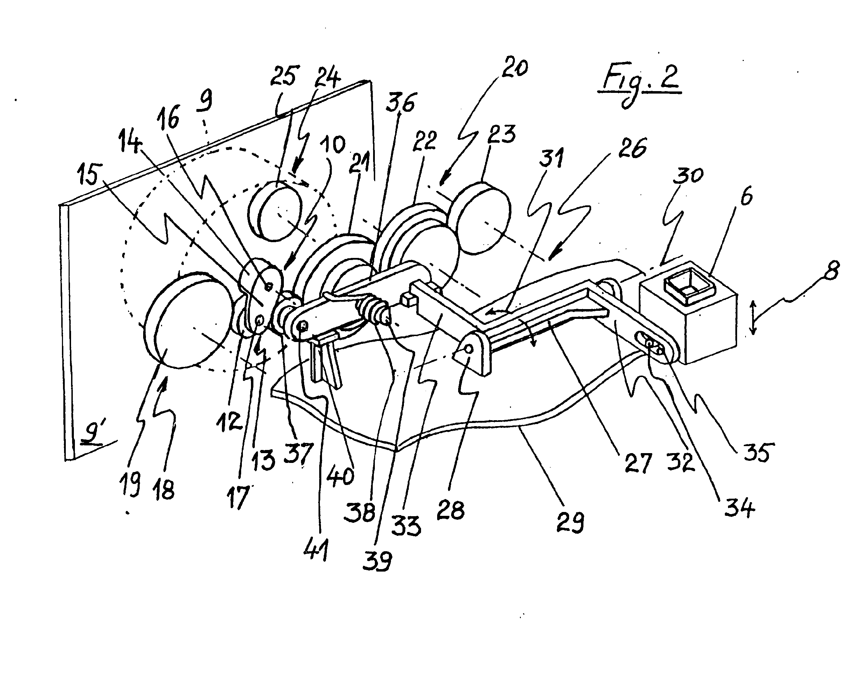

La machine qui va maintenant être décrite est un télécopieur dont l'imprimante 1 est représentée à la figure 1. Le scanner n'a pas été représenté, si ce n'est que par la roue d'entrée de l'engrenage qui assure le défilement des feuilles dans ce scanner (figure 2, notamment).

L'imprimante comporte un chargeur 2, à partir duquel les feuilles à imprimer sont alimentées dans l'imprimante, un chariot de tête d'impression 3, ici une tête à jet d'encre, monté mobile en translation transversale (flèche 7) pour imprimer une feuille 4 (en tirets sur la figure 1) au cours de son déplacement (flèche 5) dans l'imprimante, une station de garage 6, pour la protection des buses de la tête d'impression lorsque l'imprimante n'imprime pas, et un moteur électrique multifonctionnel 9 pouvant tourner dans les deux sens monté sur un support 9'. On remarquera que, sur la figure 2, le moteur 9 est représenté caché par son support représenté de façon symbolique par un panneau 9'.

Le garage 6 est un organe motorisé (le moteur n'a pas été représenté ici) qui est entraîné en déplacement vertical (flèche 8) d'une position basse de repos, dans laquelle l'imprimante imprime, à une position fonctionnelle haute de protection, dans laquelle il vient coiffer les buses de la tête d'impression lorsque l'imprimante n'imprime plus. Le cycle de fonctionnement du garage est l'inverse de celui de l'imprimante.

Trois cinématiques de la machine partent du moteur, une quatrième y arrive en partant du garage.

En réalité, les cinématiques qui arrivent au moteur 9, sont des trains d'engrenages, ici tous à engrenages extérieurs. On y reviendra plus loin.

Les éléments électriques du moteur sont disposés à l'intérieur d'un carter, ou capot, 9 qui est fixé au support 9' et hors duquel sort l'arbre d'entraînement du moteur.

### Engrenage baladeur

L'engrenage baladeur 10, dont l'utilité apparaîtra plus loin, et qui est un engrenage extérieur, comporte donc deux roues, une roue menante 11 et une roue menée 12. La roue menante 11 est montée sur l'arbre de sortie du moteur 9. Les axes des deux roues sont liés entre eux par une coque 13 montée tourillonnante en 16 sur la roue menante par une jupe cylindrique ouverte 14 entourant la roue menante et se prolongeant par une semelle 15 sur laquelle la roue menée 12 est montée tourillonnante.

L'entraînement en rotation de la roue menante 11 par l'arbre du moteur 9 entraîne par frottement la rotation de la jupe 14 et donc le pivotement de la semelle 15 dans le même sens que l'arbre du moteur.

### Train d'engrenages de chargement des feuilles dans l'imprimante

Ce train d'engrenages 18 comporte une première roue 19, d'axe parallèle à celui du moteur, montée tourillonnante sur le support 9' du moteur 9.

Les autres roues du train 18 n'ont pas été représentées.

### Train d'engrenages d'avance des feuilles dans l'imprimante

Le train d'engrenages 20 comporte une première roue 21, d'axe parallèle à celui du moteur, montée tourillonnante sur le support 9' du moteur 9 et une série d'autres roues, dont deux 22, 23 ont été représentées sur la figure 2.

### Train d'engrenages de défilement des feuilles dans le scanner

Ce train d'engrenages 24 comporte une première roue 25, d'axe parallèle à celui du moteur, montée tourillonnante sur le support 9' du moteur 9.

Les autres roues du train 24 n'ont pas été représentées.

### Cinématique du garage

Au garage 6 est associée une cinématique 26 comprenant un bras coudé 27, un levier baladeur pivotant 36 et une roue de sortie 37.

Le bras coudé 27 est monté sur deux oreilles 28 du socle 20 de la machine pour tourillonner (flèche 31) autour d'un axe 30 ici orthogonal à celui du moteur. Le bras 27 se prolonge sensiblement à angle droit, d'un côté, vers le garage 6, par un avant-bras 32, et, de l'autre côté, vers le moteur 9, par une épaule 33. Le garage 6 porte un ergot 34 engagé dans une lumière 35 de l'avant-bras 32 pour solidariser la cinématique 26 au garage 6 et transformer le déplacement vertical 8 du garage 6 en pivotement 31 autour de l'axe 30 du bras 27.

Le levier baladeur 36 est monté pivotant autour d'un pivot 39 du bâti de la machine sous l'action d'un ressort 38 pouvant l'entraîner en butée contre un butoir 40 du socle 29.

L'épaule 33 du bras 27 est en prise sur l'une des extrémités du levier baladeur 36, pour le faire pivoter contre l'action du ressort 38, c'est-à-dire pour transformer le déplacement vertical du garage 6 en pivotement autour du pivot 39 et donc en déplacement sensiblement vertical, compte-tenu du faible débattement, et de même sens que le déplacement du garage 6, de l'autre extrémité du levier baladeur 36. Et c'est sur cette autre extrémité du baladeur que la roue 37 est embarquée montée tourillonnante en 41, autour d'un axe parallèle à celui du moteur 9. En outre, les axes de rotation de la roue 37 et de la roue 21 du train d'engrenages 20 sont liés entre eux.

L'engrenage baladeur 10 est attaqué par le moteur 9 et, selon son sens de rotation et la position du garage 6, et donc de la roue 37, attaque l'un ou l'autre des trains d'engrenages 18, 20, 24.

### Fonctionnement

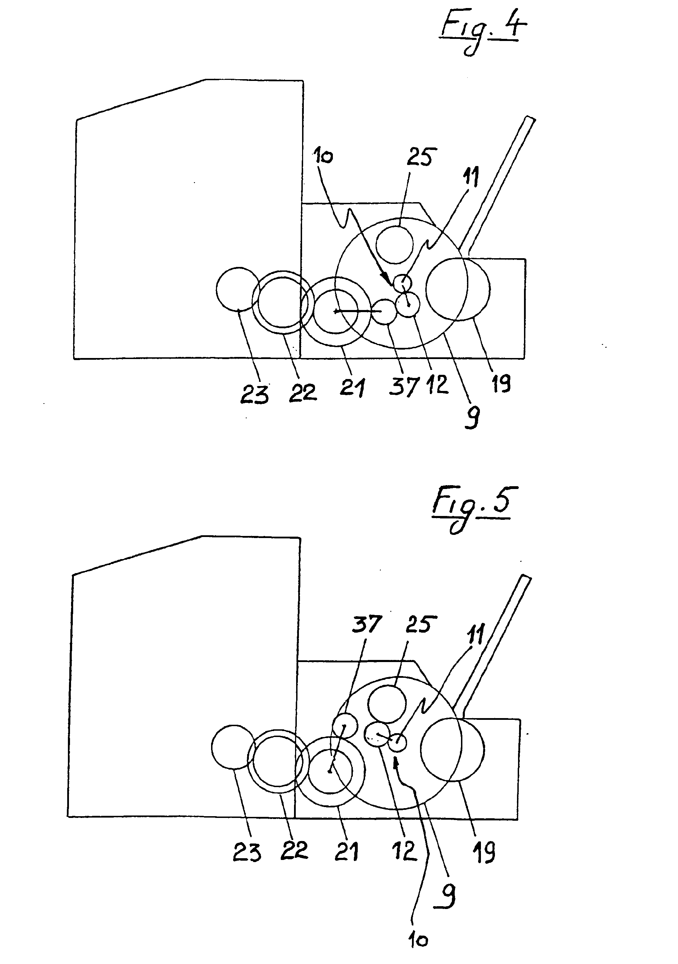

### 1) Imprimante en fonctionnement (figures 3, 4)

Dans cet état de l'imprimante, le garage 6 est en position basse de repos, tout comme la roue 37 embarquée en bout de la cinématique 26, le levier 36 ayant été rappelé en butée sur le butoir 40 par le ressort 38.

### 1.1 Chargement des feuilles (figure 3)

Quand on fait tourner le moteur 9 dans le sens inverse des aiguilles d'une montre, sur la figure 3, qui correspond au sens des aiguilles d'une montre sur la figure 2, par frottement, le baladeur 10 est entraîné en pivotement dans le même sens et la roue 12 du baladeur engrène avec la première roue 19 du train d'engrenages de chargement 18.

On remarquera que pour le chargement, le garage 6 peut aussi être en position haute.

### 1.2 Avance des feuilles (figure 4)

Quand on fait tourner le moteur 9 dans le sens des aiguilles d'une montre, qui correspond au sens contraire sur la figure 2, par frottement, le baladeur 10 est entraîné en pivotement dans le même sens et la roue 12 engrène avec la roue 37 en position basse pour attaquer le train d'engrenages d'avance 20.

Le garage 6 peut remonter en position haute en fin d'impression.

### 2) Scanner en fonctionnement (figure 5)

Quand le scanner est en fonctionnement, l'imprimante ne l'est pas. Les buses de sa tête d'impression sont donc protégées par le garage 6, en position haute. La roue 37 est également en position haute, hors du trajet de la roue menée 12 du baladeur 10.

Quand on fait tourner le moteur dans le sens des aiguilles d'une montre sur la figure 5, par frottement, le baladeur 10 est entraîné en pivotement dans le même sens jusqu'à ce que la roue menée 12 engrène avec la roue 25 du train d'engrenages 24.

## Revendications

1. Machine de bureau comprenant une imprimante (1) et un scanner, une cinématique (18) de chargement des feuilles dans l'imprimante, une cinématique (20) d'avance des feuilles dans l'imprimante, une cinématique (24) de défilement des feuilles dans le scanner et un organe mobile (6) à cycle de fonctionnement inverse de celui de l'imprimante, machine **caractérisée par le fait qu'**elle comporte un unique moteur (9) d'imprimante et de scanner, un engrenage baladeur (10) attaqué par le moteur (9) et agencé pour, selon le sens de rotation du moteur, être pivoté et attaquer la cinématique de défilement (20) et la cinématique de chargement (18), et une cinématique (26) solidaire de l'organe mobile (6) pour faire engrener l'engrenage baladeur (10) et la cinématique d'avance (20).

2. Machine de bureau selon la revendication 1, dans laquelle l'organe (6) est monté mobile en déplacement vertical et la cinématique (26) qui en est solidaire est agencée pour transformer ce déplacement vertical en un déplacement sensiblement vertical de même sens.

3. Machine de bureau selon l'une des revendications 1 et 2, dans laquelle la cinématique (26) de l'organe mobile (6) porte une roue de sortie (37) embarquée sur un levier pivotant (36) et agencée pour engrener avec l'engrenage baladeur (10) et attaquer la cinématique d'avance (20).

4. Machine de bureau selon l'une des revendications 1 à 3, dans laquelle l'engrenage baladeur (10) comporte une roue menante (11) montée sur l'arbre du moteur (9) et une roue menée (12) portée par une coque (13) montée tourillonnante sur la roue menante (11) et agencée pour être entraînée en pivotement par frottement.

5. Machine de bureau selon l'une des revendications 1 à 4, dans laquelle les cinématiques de défilement (24) et de chargement (18) comportent, chacune, une roue (25, 19) montée sur un support (9') du moteur (9).

6. Machine de bureau selon l'une des revendications 1 à 5, dans laquelle l'imprimante (1) comporte une tête d'impression à jet d'encre (3) et ledit organe mobile est une station garage (6) de protection des buses de la tête d'impression (3).

## Claims

1. Office machine comprising a printer (1) and a scanner, kinematics (18) for loading sheets into the printer, kinematics (20) for advancing sheets in the printer, kinematics (24) for moving sheets in the scanner and a movable member (6) which has an operational cycle opposite to that of the printer, the machine being **characterised in that** it has a single motor (9) for the printer and scanner, a gear bank (10) driven by the motor (9) and arranged, depending upon the rotational direction of the motor, in order to be pivoted and to drive the advancing kinematics (20) and the loading kinematics (18), and kinematics (26) fixedly attached to the movable member (6) for causing the gear bank (10) and the advancing kinematics (20) to engage.

2. Office machine as claimed in Claim 1, wherein the member (6) is mounted so as to be able to move vertically and the kinematics (26) which are fixedly attached thereto are arranged to convert this vertical movement into substantially vertical movement in the same direction.

3. Office machine as claimed in any one of Claims 1 and 2, wherein the kinematics (26) of the movable member (6) have an output gear (37) mounted on a pivoting lever (36) and arranged to engage with the gear bank (10) and to drive the advancing kinematics (20).

4. Office machine as claimed in any one of Claims 1 to 3, wherein the gear bank (10) has a driving gear (11) mounted on the shaft of the motor (9) and a driven gear (12) supported on a housing (13) mounted in a journalled manner on the driving gear (11) and arranged to be frictionally pivotally driven.

5. Office machine as claimed in any one of Claims 1 to 4, wherein the moving kinematics (24) and the loading kinematics (18) each have a gear (25, 19) mounted on a support (9') of the motor (9).

6. Office machine as claimed in any one of Claims 1 to 5, wherein the printer (1) has an inkjet printing head (3) and said movable member is a garage station (6) for protecting the nozzles of the printing head (3).

## Patentansprüche

1. Büromaschine mit einem Drucker (1) und einem Scanner, einer Kinematik (18) zum Einziehen der Blätter in den Drucker, einer Kinematik (20) für den Vorschub der Blätter im Drucker, einer Kinematik (24) zum Vorbeiführen der Blätter im Scanner, und einem beweglichen Organ (6) mit einem Betriebszyklus, der umgekehrt zu demjenigen des Druckers ist,
wobei die Maschine **dadurch gekennzeichnet ist,**
**daß** sie folgendes aufweist:
einen einzigen Motor (9) für den Drucker und den Scanner, ein Schwenkgetriebe (10), an dem der Motor (9) angreift und das dazu ausgelegt ist, gemäß der Drehrichtung des Motors, verschwenkt zu werden und an der Vorbeiführ-Kinematik (20) und der Einzieh-Kinematik (18) anzugreifen, und eine Kinematik (26), die an das bewegliche Organ (6) angeschlossen ist, um das Schwenkgetriebe (10) und die Vorschub-Kinematik (20) miteinander in Eingriff zu bringen.

2. Büromaschine nach Anspruch 1,
bei der das Organ (6) für eine vertikale Verschiebung beweglich gelagert ist und die daran angeschlossene Kinematik (26) dazu ausgelegt ist, diese vertikale Verschiebung in eine im wesentlichen vertikale Verschiebung in der gleichen Richtung umzuwandeln.

3. Büromaschine nach einem der Ansprüche 1 und 2,
bei der die Kinematik (26) des beweglichen Organs (6) ein Ausgangsrad (37) trägt, das auf einem Schwenkhebel (36) angebracht ist und dazu ausgelegt ist, mit dem Schwenkgetriebe (10) in Eingriff zu treten und an der Vorschub-Kinematik (20) anzugreifen.

4. Büromaschine nach einem der Ansprüche 1 bis 3,
bei der das Schwenkgetriebe (10) ein Antriebsrad (11), das auf der Welle des Motors (9) gelagert ist, und ein angetriebenes Rad (12) aufweist, das von einer Schale (13) getragen ist, welches drehbar auf dem Antriebsrad (11) gelagert ist und dazu ausgelegt ist, durch Reibung drehbar angetrieben zu werden.

5. Büromaschine nach einem der Ansprüche 1 bis 4,
bei der die Vorbeiführ-Kinematik (24) und die Einzug-Kinematik (18) jeweils ein Rad (25, 19) aufweisen, das an einem Träger (9') für den Motor (9) gelagert ist.

6. Büromaschine nach einem der Ansprüche 1 bis 5,
bei der der Drucker (1) einen Tintenstrahl-Druckkopf (3) aufweist und das bewegliche Organ eine Garagenstation (6) zum Schutz der Düsen des Druckkopfes (3) ist.
